# EUROPÄISCHE PATENTSCHRIFT

(11) **EP 2 132 463 B1**
(45) Veröffentlichungstag und Bekanntmachung des Hinweises auf die Patenterteilung: **28.07.2010**
(21) Anmeldenummer: 08718269.7
(22) Anmeldetag: 27.03.2008
(51) Int. Cl.: F16H 61/16, F16H 63/50

(54) **VERFAHREN UND SYSTEM ZUM STEUERN UND/ODER REGELN EINES MEHRSTUFIGEN AUTOMATGETRIEBES EINES FAHRZEUGES**
METHOD AND SYSTEM FOR CONTROLLING AND/OR REGULATING A MULTI-STEP AUTOMATIC GEARBOX OF A VEHICLE
PROCEDE DE COMMANDE ET/OU DE REGULATION D'UNE BOITE DE VITESSES AUTOMATIQUE ETAGEE D'UN VEHICULE

(30) Priorität: 07.04.2007 DE 102007016761
(43) Veröffentlichungstag der Anmeldung: 16.12.2009
(73) Patentinhaber: ZF Friedrichshafen AG, 88038 Friedrichshafen (DE)
(72) Erfinder: WINKEL, Matthias, 88250 Weingarten (DE)
(86) Internationale Anmeldenummer: PCT/EP2008/053634
(87) Internationale Veröffentlichungsnummer: WO 2008/122519

(56) Entgegenhaltungen:
- EP-A- 0 578 399
- DE-A1- 10 065 725
- DE-A1- 19 740 648
- US-A- 5 685 799

## Beschreibung

Die vorliegende Erfindung betrifft ein Verfahren und ein System zum Steuern und/oder Regeln eines Automatgetriebes gemäß der im Oberbegriff des Patentanspruches 1 bzw. 9 näher definierten Art.

Aus der Fahrzeugtechnik ist es bekannt, dass bei Automatgetrieben mit gestufter Übersetzung die Fahrsituation auftreten kann, dass eine maximal zugelassene Motordrehzahl erreicht wird, aber im Anschlussgang zu wenig Leistung zur Verfügung steht. Aufgrund des Leistungsmangels kann durch den Motor nicht die geforderte Zugkraft oder das gewünschte Beschleunigungsvermögen aufgebracht werden, die für die nächst höhere Gangstufe benötigt werden.

Diese vorbeschriebene Fahrsituation wird in der Regel von einer Fahrstrategie eines Automatgetriebes erkannt. Als Folge daraus wird in dieser Fahrsituation eine Hochschaltung verhindert. Die Häufigkeit des Auftretens dieser Fahrsituation nimmt mit größeren Übersetzungsänderungen pro Gangsprung zu, d. h. die Fahrsituation tritt häufiger bei Getrieben mit weniger Gängen, z. B. mit sechs Gängen, als bei Getrieben mit einer höheren Anzahl von Gangstufen auf, z. B. mit 16 Gangstufen.

Durch das Verhindern des Hochschaltens in solchen Fahrsituationen ergibt sich somit das Problem, dass der Motor des Fahrzeuges über einen längeren Zeitraum mit maximaler Motordrehzahl betrieben wird. Für den Betrieb des Motors bei Volllastdrehzahl ergibt sich ein schlechter Wirkungsgrad. Infolgedessen steigt der Kraftstoffverbrauch erheblich an. Zudem wird die Umwelt durch höhere Abgasmengen und durch stärkere Lärmentwicklung belastet. Darüber hinaus verringert sich die Fahrerakzeptanz, da der Fahrer eine Hochschaltung in der beschriebenen Fahrsituation erwartet.

Die Druckschrift EP 0578399 wird als nächster Stand der Technik angesehen und offenbart die Merkmale des Oberbegriffs des Anspruchs 1.

Beispielweise aus der Druckschrift DE 197 40 648 A1 ist eine Vorrichtung zum Steuern des Gangschaltens bei einem automatischen Getriebe bekannt. Bei dieser bekannten Vorrichtung ist eine Einrichtung zum Verhindern des Hochschaltens vorgesehen, die erst nach einem bestimmten Zeitraum die Hochschaltung zulässt bzw. durchführt. Wenn die aktuelle Motordrehzahl der maximalen Motordrehzahl entspricht, wird die Hochschaltung verhindert. Sobald jedoch die aktuelle Drehzahl die maximale Motordrehzahl überschreitet, wird die Hochschaltung ausgelöst, so dass die Motordrehzahl wieder abgesenkt wird. Somit wird bei der bekannten Vorrichtung ein Überschreiten der maximalen Motordrehzahl dadurch verhindert, dass eine Hochschaltung erfolgt.

Somit wird das eingangs geschilderte Problem des Leistungsmangels im nächst höheren Gang gerade nicht durch die bekannte Vorrichtung gelöst. Denn durch die Hochschaltung bei der bekannten Vorrichtung in die nächst höhere Gangstufe kann die geforderte Zugkraft und das geforderte Beschleunigungsvermögen nicht durch den Motor aufgebracht werden. Da bei der bekannten Vorrichtung der Betrieb bei maximaler Motordrehzahl zugelassen wird, steigt zudem der Kraftstoffverbrauch.

Demzufolge liegt der vorliegenden Erfindung die Aufgabe zugrunde, ein Verfahren und ein System der eingangs beschriebenen Gattung vorzuschlagen, mit denen ein Motor auch bei einer Hochschaltverhinderung aufgrund eines Leistungsmangels in einen möglichst optimalen Bereich bezüglich des Motorwirkungsgrades betrieben wird.

Diese Aufgabe wird erfindungsgemäß bezüglich des Verfahrens durch die Merkmale des Patentanspruches 1 und hinsichtlich des Systems durch die Merkmale des Patentanspruches 9 gelöst. Weitere vorteilhafte Ausgestaltungen ergeben sich insbesondere aus den Unteransprüchen.

Demnach wird die der Erfindung zugrunde liegende Aufgabe durch ein Verfahren zum Steuern und/oder Regeln eines mehrstufigen Automatgetriebes eines Fahrzeuges gelöst, bei dem eine Hochschaltung aufgrund des Erreichens der Leistungsgrenze des Motors des Fahrzeuges verhindert wird, wobei die Motordrehzahl nach dem Erkennen der Fahrsituation, bei der die Leistungsgrenze erreicht wird, auf einen vorbestimmten, verbrauchsfreundlichen Grenzwert festgelegt wird.

Durch das Limitieren der Motordrehzahl wird quasi eine verbrauchsfreundlichere Volllastdrehzahl als Grenzwert bei Erkennen der vorgenannten Fahrsituation eingestellt, sodass sich nicht nur eine Reduzierung des Verbrauchs durch den besseren Motorwirkungsgrad bei der festgelegten Volllastdrehzahl ergibt, sondern es wird auch die Fahrerakzeptanz erhöht. Die Fahrerakzeptanz wird dadurch erhöht, dass der Fahrer aufgrund der limitierten Motordrehzahl das Vorliegen des Leistungsmangels des Motors im aktuellen Gang realisiert und somit eine Hochschaltung in dieser Fahrsituation nicht erwartet. Zusätzlich wird durch das erfindungsgemäße Verfahren auch die Umweltbelastung aufgrund der geringeren Abgasmenge und der geringeren Lärmbelastung erheblich reduziert.

Im Rahmen einer möglichen Ausführungsvariante der Erfindung kann vorgesehen sein, dass bei dem erfindungsgemäßen Verfahren der Grenzwert in Abhängigkeit von vorbestimmten Fahrzeug- und/oder Fahrzustandsgrößen bestimmt wird. Es hat sich gezeigt, dass der Grenzwert in vorteilhafter Weise z. B. in Abhängigkeit der aktuellen Übersetzungsstufe und/oder der Fahrzeuggeschwindigkeit und/oder der Fahrsituation und/oder des Fahrerwunsches und/oder des Motorzustandes und/oder der Dauer der Fahrsituation bestimmt werden sollte. Es können auch andere Fahrzeug- oder Fahrzustandsgrößen bei der Bestimmung des Grenzwertes berücksichtigt werden.

Wenn der Motor beispielsweise die als Grenzwert festgelegte Motordrehzahl in einer Fahrsituation schon überschritten hat, kann die aktuelle Drehzahl beibehalten werden und somit als Grenzwert bestimmt werden. Es ist aber auch möglich, dass die Drehzahl auf den festgelegten Grenzwert zurückgeführt wird, um den ursprünglich festgelegten Grenzwert einzustellen.

Vorzugsweise wird der Grenzwert unterhalb der maximalen Motordrehzahl festgelegt, damit ein wirtschaftlicher Betrieb des Motors des Fahrzeuges erreicht wird. Sobald die Fahrsituation eine Hochschaltung wieder zulässt, kann gemäß einer Weiterbildung der Erfindung vorgesehen sein, dass der Grenzwert aufgehoben und die Motordrehzahl auf einen vorbestimmten Wert, z. B. auf die Schaltdrehzahl, geführt wird, um somit den gewünschten Schaltvorgang durchführen zu können. Es sind auch andere Strategien hinsichtlich der Motordrehzahlregelung in dieser Situation möglich. Insbesondere wenn bestimmte Fahrprogramme bei dem Automatgetriebe aktiviert sind.

Gemäß einer nächsten Ausgestaltung der Erfindung kann vorgesehen sein, dass die Festlegung eines Grenzwertes der Motordrehzahl bei vorbestimmten Fahrprogrammen bzw. Fahrzuständen nicht durchgeführt wird. Beispielsweise bei einem manuellen Schaltbetrieb oder auch bei anderen gewählten Fahrprogrammen des Automatgetriebes kann ein Grenzwert bei der Motordrehzahl nicht festgelegt werden. Zu diesen Fahrprogrammen kann auch der so genannte Kickdown-Betrieb gezählt werden.

Es ist aber auch möglich, dass bei aktiviertem Kickdown-Fahrprogramm ein Grenzwert der Motordrehzahl bei Erreichen der Leistungsgrenze festgelegt wird. Jedoch sollten in diesem Fall die Parameter für die Festlegung des Grenzwertes entsprechend angepasst und somit verändert werden.

Unabhängig von den eingangs geschilderten Fahrsituationen, bei denen eine Hochschaltung verhindert wird, kann das erfindungsgemäße Verfahren auch die Begrenzung der Volllastdrehzahl bei Erreichen der höchsten Gangstufe und/oder auch bei Erreichen des Rückwärtsgangs vorsehen. Die höchste Gangstufe kann auch erreicht werden, wenn z. B. bei einem Fahrprogramm eine Einschränkung des Fahrbereiches auf die Gangstufen 1 bis 3 bei dem Automatgetriebe festgelegt werden. Dann ist das Erreichen der dritten Gangstufe mit dem Erreichen der höchsten zugelassenen Gangstufe gleichzusetzen.

Die der Erfindung zugrunde liegende Aufgabe wird auch durch ein System zum Steuern und/oder Regeln eines mehrstufigen Automatgetriebes eines Fahrzeuges gelöst, welches eine Einrichtung zum Ansteuern von Schaltvorgängen umfasst, die eine Hochschaltung aufgrund des Erreichens der Leistungsgrenze des Fahrzeugmotors verhindert. Erfindungsgemäß sieht das System vor, dass die Einrichtung nach dem Erkennen des Erreichens der Leistungsgrenze die Motordrehzahl auf einen vorbestimmten Grenzwert festlegt. Damit ergeben sich die bei dem Verfahren bereits genannten Vorteile. Vorzugsweise wird die erfindungsgemäß vorgeschlagene Vorrichtung zum Durchführen des eingangs beschriebenen Verfahrens verwendet. Es sind aber auch andere Einsatzbereiche denkbar.

Nachfolgend wird die vorliegende Erfindung anhand der Zeichnungen näher erläutert.

Es zeigen:
- Fig. 1: ein Diagramm eines beispielhaften Motordiagramms, in dem die Leistung, das Drehmoment und der Kraftstoffverbrauch über die Drehzahl dargestellt sind; und
- Fig. 2: ein Diagramm mit beispielhaften Drehzahlverläufen mit und ohne Begrenzung der Motordrehzahl.

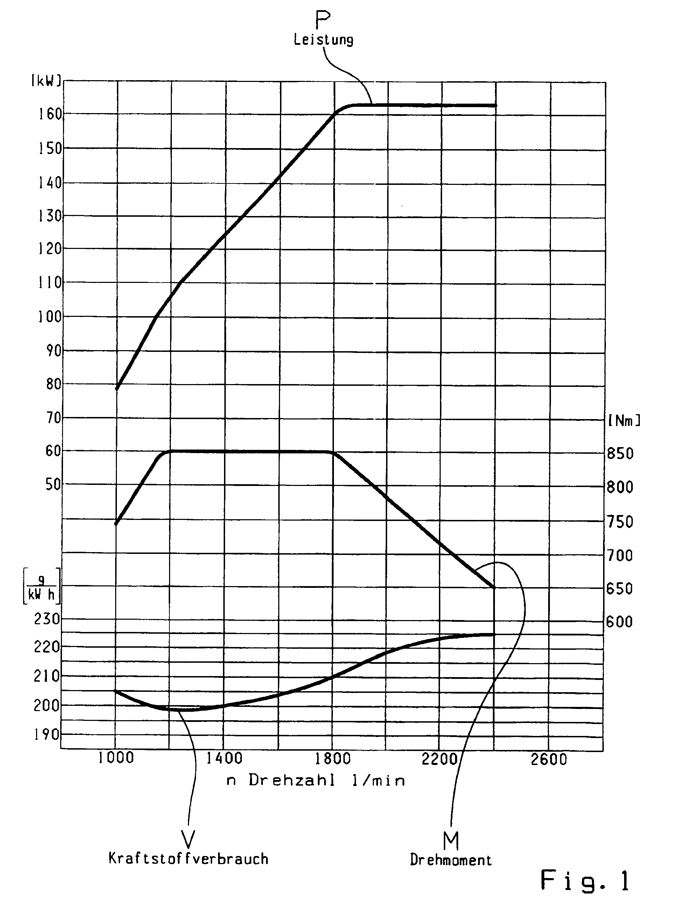

In Fig. 1 ist beispielhaft die Leistung P, das Drehmoment M und der Kraftstoffverbauch V über die Motordrehzahl n in einem Diagramm dargestellt.

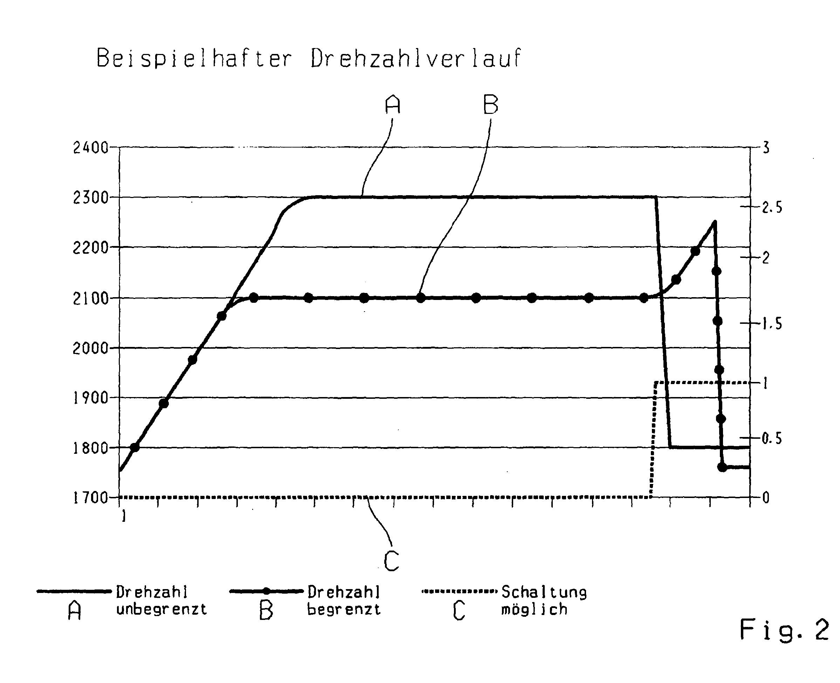

Das in Fig. 2 dargestellte Diagramm zeigt verschiedene Drehzahlverläufe des Motors. Mit A ist der Drehzahlverlauf des Motors bezeichnet, bei dem die Motordrehzahl n nicht begrenzt wird, wenn eine Hochschaltung verhindert wird. Der Verlauf A, bei dem die Volllastdrehzahl des Motors nicht reduziert wird, ist durch eine durchgezogene Linie gekennzeichnet. Mit B ist ein weiterer Drehzahlverlauf bezeichnet, bei dem ein Grenzwert n_{Grenzwert} bei der Motordrehzahl n festgelegt wird. Der Verlauf B ist durch eine strichpunktierte Linie gekennzeichnet. Schließlich ist noch ein gestrichelter Verlauf C in dem Diagramm der Fig. 2 dargestellt, welcher angibt, wann eine Schaltung möglich ist.

Der Drehzahlverlauf A zeigt, dass die Motordrehzahl n aufgrund der nicht zugelassenen Hochschaltung steil ansteigt bis die maximale Motordrehzahl bzw. Volllastdrehzahl nₘₐₓ von 2 300 Umdrehungen pro Minute erreicht wird. Sobald eine Hochschaltung in die nächst höhere Gangstufe wieder möglich ist, welches durch den Anstieg bei dem Verlauf C auf den Wert 1 angedeutet wird, fällt die Motordrehzahl n plötzlich steil ab bis sie schließlich den Wert 1 800 Umdrehungen pro Minute erreicht. Aus dem Verlauf A ist ersichtlich, dass die Motordrehzahl n über einen längeren Zeitraum bei 2 300 Umdrehungen pro Minute liegt. Bei dieser Drehzahl ergibt sich ein Kraftstoffverbrauch von etwa 225 g/kWh.

Bei dem erfindungsgemäßen Verfahren wird die Motordrehzahl n auf einen vorbestimmten Grenzwert n_{Grenzwert} festgelegt, wenn eine Hochschaltung in eine nächst höhere Gangstufe aufgrund eines Leistungsmangels nicht möglich ist. Diese Drehzahlsteuerung durch das vorgeschlagene Verfahren wird durch den Drehzahlverlauf B mittels strichpunktierter Linie dargestellt. Bei dem Verlauf B ergibt sich anfangs ein Anstieg ähnlich wie bei dem Verlauf A auf. Wenn der festgelegte Grenzwert n_{Grenzwert} der Motordrehzahl, der bei dem gezeigten Beispiel auf 2 100 Umdrehungen pro Minute festgelegt ist, erreicht wird, bleibt die Drehzahl konstant. Erst wenn eine Hochschaltung wieder zugelassen und der Grenzwert n_{Grenzwert} aufgehoben wird, kann die Motordrehzahl n kurzzeitig auf eine vorbestimmte Schaltdrehzahl erhöht werden, um den Schaltvorgang durchzuführen. Im nächst höheren Gang fällt die Drehzahl auf etwa 1 750 Umdrehungen pro Minute. Der Kraftstoffverbrauch liegt bei dem Grenzwert n_{Grenzwert} von 2 100 Umdrehungen pro Minute etwa bei 220 g/kWh.

Bei einem Vergleich der beiden Verläufe A und B wird deutlich, dass durch die Verwendung eines Grenzwertes n_{Grenzwert} für die Volllastdrehzahl bei dem erfindungsgemäßen Verfahren der Drehzahlverlauf über einen längeren Zeitraum abgesenkt wird. Infolgedessen ergibt sich ein reduzierter Verbrauch von etwa 2,5 %, wenn das erfindungsgemäße Verfahren verwendet bzw. das erfindungsgemäße System eingesetzt wird.

### Bezugszeichen

- A: unbegrenzter Drehzahlverlauf
- B: begrenzter Drehzahlverlauf
- C: Schaltung
- P: Leistung
- M: Drehmoment
- V: Kraftstoffverbrauch
- n: Motordrehzahl
- n_{Grenzwert}: Grenzwert
- nₘₐₓ: maximale Motordrehzahl

## Patentansprüche

1. Verfahren zum Steuern und/oder Regeln eines mehrstufigen Automatgetriebes eines Fahrzeuges, bei dem eine Hochschaltung aufgrund des Erreichens der Leistungsgrenze des Motors des Fahrzeuges verhindert wird, **dadurch gekennzeichnet, dass** die Motordrehzahl (n) nach dem Erkennen einer Fahrsituation, bei der die Leistungsgrenze des Motors erreicht wird, auf einen vorbestimmten, verbrauchsfreundlichen Grenzwert (n_{Grenzwert}) festgelegt wird.

2. Verfahren nach Anspruch 1, **dadurch gekennzeichnet , dass** der Grenzwert (n_{Grenzwert}) in Abhängigkeit von Fahrzeug- und/oder Fahrzustandsgrößen bestimmt wird.

3. Verfahren nach Anspruch 2, **dadurch gekennzeichnet , dass** der Grenzwert (n_{Grenzwert}) in Abhängigkeit der aktuellen Übersetzungsstufe und/oder der Fahrzeuggeschwindigkeit und/oder der Fahrsituation und/oder des Fahrerwunsches und/oder des Motorzustandes und/oder der Dauer der Fahrsituation bestimmt wird.

4. Verfahren nach einem der vorangehenden Ansprüche, **dadurch gekennzeichnet, dass** der Grenzwert (n_{Grenzwert}) unterhalb der maximalen Motordrehzahl (nₘₐₓ) festgelegt wird.

5. Verfahren nach einem der vorangehenden Ansprüche, **dadurch gekennzeichnet, dass** die Motordrehzahl (n) nach dem Aufheben des Grenzwertes (n_{Grenzwert}) auf die Schaltdrehzahl der zu schaltenden Gangstufe zum Durchführen des Schaltvorganges geführt wird.

6. Verfahren nach einem der vorangehenden Ansprüche, **dadurch gekennzeichnet, dass** die Festlegung eines Grenzwertes (n_{Grenzwert}) der Motordrehzahl (n) bei vorbestimmten Fahrprogrammen des Automatgetriebes nicht durchgeführt wird.

7. Verfahren nach einem der vorangehenden Ansprüche, **dadurch gekennzeichnet, dass** bei einem Kick-Down-Fahrprogramm die Parameter für den Grenzwert (n_{Grenzwert}) verändert werden.

8. Verfahren nach einem der vorangehenden Ansprüche, **dadurch gekennzeichnet, dass** die Festlegung des Grenzwertes (n_{Grenzwert}) bei Erreichen der höchsten Gangstufe und/oder des Rückwärtsganges durchgeführt wird.

9. System zum Steuern und/oder Regeln eines mehrstufigen Automatgetriebes eines Fahrzeuges, mit einer Einrichtung zum Ansteuern von Schaltvorgängen, welche eine Hochschaltung aufgrund des Erreichens der Leistungsgrenze des Motors des Fahrzeuges verhindert, insbesondere zum Durchführen eines Verfahrens nach einem der vorangehenden Ansprüche, **dadurch gekennzeichnet, dass** die Einrichtung nach dem Erkennen des Erreichens der Leistungsgrenze die Motordrehzahl auf einen vorbestimmten, verbrauchsfreundlichen Grenzwert (n_{Grenzwert}) festgelegt.

## Claims

1. Method for controlling and/or regulating a multistage automatic gearbox of a vehicle, in which method an upshift is prevented on account of the power limit of the engine of the vehicle being reached, **characterized in that**, after the detection of a driving situation in which the power limit of the engine is reached, the engine rotational speed (n) is set to a predetermined, consumption-friendly limit value (n_{limit value}).

2. Method according to Claim 1, **characterized in that** the limit value (n_{limit value}) is determined as a function of vehicle and/or driving state variables.

3. Method according to Claim 2, **characterized in that** the limit value (n_{limit value}) is determined as a function of the present transmission ratio stage and/or the vehicle speed and/or the driving situation and/or the driver demand and/or the engine state and/or the duration of the driving situation.

4. Method according to one of the preceding claims, **characterized in that** the limit value (n_{limit value}) is set below the maximum engine rotational speed (nₘₐₓ).

5. Method according to one of the preceding claims, **characterized in that**, after the withdrawal of the limit value (n_{limit value}), the engine rotational speed (n) is adjusted to the shift rotational speed of the gear stage to be shifted in order to carry out the shift process.

6. Method according to one of the preceding claims, **characterized in that** the setting of a limit value (n_{limit value}) of the engine rotational speed (n) is not carried out in predetermined driving programmes of the automatic gearbox.

7. Method according to one of the preceding claims, **characterized in that**, in a kickdown driving programme, the parameters for the limit value (n_{limit value}) are changed.

8. Method according to one of the preceding claims, **characterized in that** the setting of the limit value (n_{limit value}) is carried out when the highest gear stage and/or the reverse gear is reached.

9. System for controlling and/or regulating a multistage automatic gearbox of a vehicle, having a device for actuating shift processes, which device prevents an upshift on account of the power limit of the engine of the vehicle being reached, in particular for carrying out a method according to one of the preceding claims, **characterized in that**, after it is detected that the power limit has been reached, the device sets the engine rotational speed at a predetermined, consumption-friendly limit value (n_{limit value}).

## Revendications

1. Procédé de commande et/ou de régulation d'une boîte de vitesses automatique à plusieurs rapports d'un véhicule, selon lequel le passage à un rapport supérieur est empêché en raison du fait que le moteur du véhicule a atteint sa limite de puissance, **caractérisé en ce que** la vitesse de rotation du moteur (n), après avoir détecté une situation de conduite avec laquelle la limite de puissance du moteur est atteinte, est fixée à une valeur limite (n_{valeur_limite}) prédéfinie d'utilisation agréable.

2. Procédé selon la revendication 1, **caractérisé en ce que** la valeur limite (n_{valeur_limite}) est déterminée en fonction de grandeurs du véhicule et/ou de l'état de déplacement.

3. Procédé selon la revendication 2, **caractérisé en ce que** la valeur limite (n_{valeur_limite}) est déterminée en fonction du rapport de démultiplication actuel et/ou de la vitesse du véhicule et/ou de la situation de conduite et/ou du souhait du conducteur et/ou de l'état du moteur et/ou de la durée de la situation de conduite.

4. Procédé selon l'une des revendications précédentes, **caractérisé en ce que** la valeur limite (n_{valeur_limite}) est fixée au-dessous de la vitesse de rotation maximale du moteur (nₘₐₓ).

5. Procédé selon l'une des revendications précédentes, **caractérisé en ce que** la vitesse de rotation du moteur (n) est amenée à la vitesse de rotation de changement de rapport du rapport à engager en vue d'effectuer le changement de rapport après la suppression de la valeur limite (n_{valeur_limite}).

6. Procédé selon l'une des revendications précédentes, **caractérisé en ce que** la fixation d'une valeur limite (n_{valeur_limite}) de la vitesse de rotation du moteur (n) n'est pas effectuée avec certains programmes de conduite prédéfinis de la boîte de vitesses automatique.

7. Procédé selon l'une des revendications précédentes, **caractérisé en ce que** les paramètres pour la valeur limite (n_{valeur_limite}) sont modifiés dans le cas d'un programme de conduite kick de reprise.

8. Procédé selon l'une des revendications précédentes, **caractérisé en ce que** la fixation de la valeur limite (n_{valeur_limite}) est effectuée en atteignant le rapport le plus élevé et/ou la marche arrière.

9. Système de commande et/ou de régulation d'une boîte de vitesses automatique à plusieurs rapports d'un véhicule, comprenant un dispositif pour commander les changements de rapport qui empêche le passage à un rapport supérieur en raison du fait que le moteur du véhicule a atteint sa limite de puissance, notamment pour mettre en oeuvre un procédé selon l'une des revendications précédentes, **caractérisé en ce que** le dispositif fixe la vitesse de rotation du moteur à une valeur limite (n_{valeur_limite}) prédéfinie d'utilisation agréable après avoir détecté que la limite de puissance du moteur est atteinte.
